# EUROPÄISCHE PATENTANMELDUNG

(11) **EP 4 212 009 A1**
(43) Veröffentlichungstag der Anmeldung: **19.07.2023**
(21) Anmeldenummer: 23020015.6
(22) Anmeldetag: 12.01.2023
(51) Int. Cl.: A01G 9/24, A01C 1/02, A01G 31/06

(54) **PFLANZENAUFZUCHTEINHEIT MIT EINER WÄRMEBILDKAMERA ZUR FEUCHTIGKEITSBESTIMMUNG DES PFLANZSUBSTRATS UND VERFAHREN ZUM BETREIBEN DIESER PFLANZENAUFZUCHTEINHEIT**

(30) Priorität: 17.01.2022 DE 102022100971
(71) Anmelder: Harting Systems GmbH, 32339 Espelkamp (DE)
(72) Erfinder: Beyer, Oliver, 32339 Espelkamp (DE)

(57) **Zusammenfassung**

Die Erfindung betrifft eine Pflanzenaufzuchteinheit (10) mit zumindest einer Aufnahmeebene (14) für Pflanzobjekte (21) umfassendes Pflanzsubstrat (20) sowie mit einer Regeleinrichtung (24), die zur Einstellung gewünschter Umgebungsbedingungen für die Pflanzobjekte (21) eingerichtet ist.

Um die Einstellung der Umgebungsbedingungen für aufzuziehende Pflanzobjekte (21) noch genauer vornehmen zu können, wird vorgeschlagen, dass im Bereich der Aufnahmeebene (14) zumindest eine Wärmebildkamera (27) angeordnet ist, die dazu ausgebildet ist, ein Wärmebild des Pflanzsubstrats (20) aufzunehmen.

Die Erfindung betrifft auch ein Verfahren zum Betreiben einer solchen Pflanzenaufzuchteinheit (10).

## Beschreibung

Die Erfindung betrifft eine Pflanzenaufzuchteinheit gemäß dem Oberbegriff des Patentanspruchs 1 sowie ein Verfahren zum Betreiben einer Pflanzenaufzuchteinheit gemäß dem Oberbegriff des Patentanspruchs 4.

In den letzten Jahren sind die Ansprüche von Verbrauchern, insbesondere städtischen Verbrauchern, an die Bereitstellung frischer Pflanzen, wie z. B. Salat und Kräuter, aber auch Zierpflanzen weiter gestiegen. Bisherige Konzepte, bei denen Pflanzen vornehmlich auf Farmen oder Gewächshäusern von Großbetrieben angebaut und geerntet sowie anschließend über teilweise weite Transportwege zum Verbraucher befördert werden, werden verstärkt als nachteilig, da zeitaufwendig und nicht nachhaltig, angesehen. Daher erwächst insbesondere in Ballungsgebieten verstärkt ein Bedürfnis nach frischen Pflanzenprodukten, die vergleichsweise nachhaltig erzeugt worden sind.

Um diesem Bedürfnis gerecht zu werden, wurden Pflanzenaufzuchteinheiten in Form kompakter Gewächshäuser bzw. Pflanzschränke entwickelt, in denen Pflanzenkeimlinge und/oder Saatgut in geeignetem Substrat, z. B. auf Saatmatten, eingebracht werden und dort, unter ständiger Versorgung mit geeigneter Beleuchtung, Wärme, Feuchtigkeit und Nährstoffen, zu Frischpflanzen, sogenannten "Microgreens", aufgezogen werden. Solche Pflanzenaufzuchteinheiten umfassen üblicherweise mehrere Ebenen, auf denen das Substrat mit dem Pflanzenmaterial vorgehalten und zur Aufzucht versorgt wird. Pflanzenaufzuchteinheiten werden beispielsweise von größeren Supermärkten und/oder lokalen Nahrungsmittelversorgern betrieben. Die aufgezogenen Pflanzen können nach einer frühen Ernte sehr frisch in Verkaufsbereiche überführt und dort dem Verbraucher zum Kauf angeboten werden.

Für die Regelung der Umgebungsbedingungen wie Feuchtigkeit, Temperatur und Beleuchtung ist eine genaue Erfassung des aktuellen Zustands der Pflanzen notwendig, um Abweichungen von einem gewünschten Zustand durch Veränderung der Umgebungsbedingungen entgegenzuwirken.

### Stand der Technik

In diesem Zusammenhang sind Pflanzenaufzuchteinheiten bekannt, die mit verschiedenen Sensoren ausgestattet sind, um beispielsweise Temperatur und Feuchtigkeit zu erfassen. Beispiele solcher Pflanzenaufzuchteinheiten sind in den Druckschriften DE 10 2015 118 059 A1, DE 10 2018 101 697 B3 und WO 2019/051261 A1 dargestellt. Anhand der aufgenommenen Sensorwerte steuert eine Regeleinrichtung die Umgebungsbedingungen in der jeweiligen Pflanzenaufzuchteinheit an.

### Aufgabenstellung

Ausgehend von den aus dem Stand der Technik bekannten Pflanzenaufzuchteinheiten ist eine Aufgabe der Erfindung, die Einstellung der Umgebungsbedingungen für aufzuziehende Pflanzobjekte noch genauer vornehmen zu können.

### Beschreibung der Erfindung

Diese Aufgabe wird erfindungsgemäß durch eine Pflanzenaufzuchteinheit gemäß Patentanspruch 1 sowie ein Verfahren zum Betreiben einer Pflanzenaufzuchteinheit gemäß Patentanspruch 4 gelöst. Vorteilhafte Weiterbildungen sind in den entsprechenden Unteransprüchen angegeben.

Konkret wird eine Pflanzenaufzuchteinheit angegeben mit zumindest einer Aufnahmeebene für Pflanzobjekte umfassendes Pflanzsubstrat sowie mit einer Regeleinrichtung, die zur Einstellung gewünschter Umgebungsbedingungen für die Pflanzobjekte eingerichtet ist. Erfindungsgemäß ist vorgesehen, dass im Bereich der Aufnahmeebene zumindest eine Wärmebildkamera angeordnet ist, die dazu ausgebildet ist, ein Wärmebild des Pflanzsubstrats aufzunehmen.

Als Pflanzsubstrat wird hierbei jede Art eines Substrats angesehen, das zur Aufnahme von Pflanzobjekten geeignet ist. Pflanzsubstrat bietet eine ausreichende Durchwurzelbarkeit, um den Pflanzobjekten einerseits Schutz und Halt zu bieten und andererseits Feuchtigkeit und Nährstoffe bereitzustellen, die für das Keimen und Wachstum der Pflanzobjekte notwendig sind. Pflanzsubstrate können vorab mit Nährstoffen für die Pflanzobjekte versetzt sein oder diese nachträglich im Betrieb der Pflanzenaufzuchteinheit zugeführt bekommen. Pflanzsubstrate können beispielsweise in Form von Matten ausgebildet sein.

Als Pflanzobjekte werden jegliche Pflanzen, beispielsweise Kräuter, Salat, Gemüsepflanzen und Zierpflanzen, angesehen, die in Pflanzenaufzuchteinheiten herangezogen werden können, sowie deren zugehöriges Saatgut und/oder Keimlinge.

Im Rahmen der Erfindung kann insbesondere vorgesehen sein, dass die Regeleinrichtung zur Einstellung der gewünschten Umgebungsbedingungen eine Bewässerungseinrichtung und/oder eine Beleuchtungseinrichtung und/oder eine Wärmequelle ansteuert, die auf den Bereich der Aufnahmeebene einwirken. Solche Umgebungsparameter haben wesentlichen Einfluss auf den Keimungsprozess und die daran anschließende Wachstumsphase von Pflanzobjekten.

Sofern die Pflanzenaufzuchteinheit über mehrere Aufnahmeebenen verfügt, kann auch eine unterschiedliche Regelung der Umgebungsbedingungen pro Pflanzebene durchgeführt werden, um den Pflanzobjekten optimale Keimungs- und Wachstumsbedingungen zu bieten.

Der Erfindung liegt die Erkenntnis zugrunde, dass bisherige Sensoren zur Erkennung eines aktuellen Status der Pflanzobjekte in Pflanzenaufzuchteinheiten eine eher punktuelle und damit unzureichende Messung erlauben. Durch den Einsatz zumindest einer Wärmebildkamera kann hingegen eine flächige Messung stattfinden und damit eine umfassendere Information über den aktuellen Status der Pflanzobjekte gegeben werden.

Bevorzugt kann vorgesehen sein, dass die zumindest eine Wärmebildkamera zur Erfassung eines Wärmebilds der Draufsicht auf das Pflanzsubstrat oberhalb der Aufnahmeebene angeordnet ist.

Gemäß einer vorteilhaften Ausführungsform der erfindungsgemäßen Pflanzenaufzuchteinheit kann vorgesehen sein, dass die Regeleinrichtung dazu ausgebildet ist, das von der Wärmebildkamera gelieferte Bild in eine Feuchtigkeitsinformation des Pflanzsubstrats umzusetzen und in Abhängigkeit von der Feuchtigkeitsinformation die Umgebungsbedingungen für die Pflanzobjekte einzustellen.

Die Feuchtigkeitsinformation kann in diesem Zusammenhang z. B. den prozentualen Wassergehalt pro Volumen- oder Masseanteil des Substrats angeben.

Diese Ausführungsform macht sich den Effekt zunutze, dass zwischen einer Durchfeuchtung (nachfolgend auch als "Feuchtigkeit", "Feuchtigkeitszustand", "Feuchtigkeitsgehalt" oder "Feuchtigkeitsintensität" bezeichnet) eines Substrats und dessen Temperatur ein Zusammenhang besteht. So bedeutet eine stärkere Durchfeuchtung üblicherweise eine niedrigere Temperatur, da sich einerseits die Wärmeleitfähigkeit des Substrats verändert und sich andererseits durch Verdunstung das Substrat abkühlt. Je stärker die Durchfeuchtung des Substrats ist, desto deutlich treten die beschriebenen Effekte auf und die Temperatur sinkt im Vergleich zu einem trockeneren Substrat. Der Zusammenhang zwischen Temperatur und Feuchtigkeit kann beispielsweise in einer Tabelle oder einer Kennlinie hinterlegt oder mittels einer mathematischen Funktion beschrieben sein, so dass die Regeleinrichtung die Feuchtigkeitsinformation anhand der Temperaturinformation einfach ermitteln kann. Dabei kann der Zusammenhang abhängig von der Art des Pflanzsubstrats sein, so dass die Regeleinrichtung zur Umrechnung zwischen Temperatur und Feuchtigkeit eine Information über die Art des Pflanzsubstrats heranziehen kann und die Ermittlung der Feuchtigkeit entsprechend vornimmt.

Ein besonderer Vorteil einer Feuchtigkeitsbestimmung anhand der Temperaturinformation eines Wärmebildes besteht darin, dass eine flächige Information gewonnen werden kann, die auch eine Temperaturverteilung innerhalb des Substrats abbilden kann. Hierdurch lassen sich beispielsweise Rückschlüsse auf einen Keimungsprozess von Saatgut ziehen, da eine Feuchtigkeitsverteilung durch die Aufnahme von Flüssigkeit eines Keimlings und die Durchwurzelung des Substrats beeinflusst wird. Darüber hinaus lässt sich auch eine ungleichmäßige Feuchtigkeitsverteilung des Substrats erkennen und bei einer unzulässig hohen Ungleichmäßigkeit eine Fehlermeldung an das Bedienpersonal einer Pflanzenaufzuchteinheit absetzen.

Anhand der ermittelten Feuchtigkeitsinformation kann mittels der Regeleinrichtung beispielsweise eine Bewässerungseinrichtung angesteuert werden, um eine Wasserzugabe zum Pflanzsubstrat durchzuführen, zu erhöhen oder zu verringern.

Gemäß einer weiteren vorteilhaften Ausführungsform der erfindungsgemäßen Pflanzenaufzuchteinheit kann zudem vorgesehen sein, dass im Bereich der Aufnahmeebene zumindest eine weitere Kamera angeordnet ist, die zur Aufnahme eines Farbinformationen umfassenden Bildes der Pflanzobjekte eingerichtet ist und die Regeleinrichtung dazu ausgebildet ist, das von der zumindest einen weiteren Kamera gelieferte Bild der Pflanzobjekte zur Einstellung der Umgebungsbedingungen für die Pflanzobjekte heranzuziehen.

Bei dieser Ausführungsform ist somit neben der Wärmebildkamera auch eine weitere Kamera vorgesehen, die ein Echtbild der Pflanzobjekte aufnimmt, das Farbinformationen umfasst. Bei dieser weiteren Kamera kann es sich z. B. um eine RGB-Kamera handeln, die ein aus mehreren Pixeln zusammengesetztes Bild aufnimmt. Die Veränderung dieses Bildes kann von der Regeleinrichtung einerseits zur Ermittlung der Zunahme der Biomasse der Pflanzobjekte verwendet werden und andererseits zur Qualitätsüberwachung der Pflanzobjekte anhand einer Auswertung ihrer Farbe dienen.

Die zumindest eine weitere Kamera kann in räumlicher Nähe zur Wärmebildkamera angeordnet und auf dasselbe Pflanzsubstrat ausgerichtet sein. Hierdurch lässt sich sowohl während der Keimungsphase der Pflanzobjekte die Überwachung der Temperatur (und. ggf. Feuchtigkeit) des Pflanzsubstrats durchführen als auch in der an die Keimungsphase anschließenden Wachstumsphase die Veränderung der Biomasse der Pflanzobjekte beobachten. In diesem Fall ist es zudem möglich, dass Wärmebildkamera und weitere Kamera eine bauliche Einheit bilden und entweder unterschiedliche Bildsensoren oder einen Multifunktions-Sensor verwenden, der sowohl Wärme- als auch Farbinformationen erfassen kann.

Alternativ können Wärmebildkamera und weitere Kamera auch unterschiedliche Bereiche innerhalb der Pflanzenaufzuchteinheit überwachen.

Die Wärmebildkamera und die weitere Kamera können dazu ausgebildet sein, kontinuierliche Bildaufnahmen (einen sogenannten "Stream") zu liefern, der fortlaufend von der Regeleinrichtung ausgewertet wird. Alternativ kann auch eine diskontinuierliche Bildaufnahme, bevorzugt in regelmäßigen Abständen (z. B. alle 15s, 30s, 1 min, 15min, jede Stunde etc.), durchgeführt und zur Regelung der Umgebungsbedingungen herangezogen werden.

Die oben genannte Aufgabe wird auch durch ein Verfahren zum Betreiben einer Pflanzenaufzuchteinheit mit zumindest einer Aufnahmeebene für Pflanzobjekte umfassendes Pflanzsubstrat sowie mit einer Regeleinrichtung gelöst, die zur Einstellung gewünschter Umgebungsbedingungen für die Pflanzobjekte eingerichtet ist.

Erfindungsgemäß ist vorgesehen, dass mittels zumindest einer im Bereich der Aufnahmeebene vorgesehenen Wärmebildkamera ein Wärmebild des Pflanzsubstrats aufgenommen und von der Regeleinrichtung zur Einstellung der gewünschten Umgebungsbedingungen für die Pflanzobjekte herangezogen wird.

Hinsichtlich des erfindungsgemäßen Verfahrens gelten die zu der erfindungsgemäßen Pflanzenaufzuchteinheit gemachten Ausführungen in entsprechender Weise. Ebenso sind alle zu dem erfindungsgemäßen Verfahren beschriebenen Ausführungen und Vorteile analog auf die erfindungsgemäße Pflanzenaufzuchteinheit anwendbar, insbesondere kann die Pflanzenaufzuchteinheit zur Ausführung des erfindungsgemäßen Verfahrens in jeder seiner Ausführungsformen eingesetzt werden.

Gemäß einer vorteilhaften Weiterbildung des erfindungsgemäßen Verfahrens wird vorgeschlagen, dass mittels der Regeleinrichtung das Wärmebild des Pflanzsubstrats in eine Feuchtigkeitsinformation umgesetzt wird, die zur Einstellung der gewünschten Umgebungsbedingungen herangezogen wird.

Die Feuchtigkeitsinformation kann dabei wie oben bereits beschrieben anhand eines bekannten Zusammenhangs zwischen Temperatur und Feuchtigkeit (z. B. prozentualer Wasseranteil pro Masse oder Volumenanteil) des Substrats anhand der durch das Wärmebild gelieferten Temperatur bestimmt werden.

Gemäß einer weiteren vorteilhaften Ausführungsform des erfindungsgemäßen Verfahrens kann vorgesehen sein, dass die Regeleinrichtung eine feuchtigkeitsbezogene Fehlermeldung erzeugt, wenn die Feuchtigkeitsinformation eine ungleichmäßige Durchfeuchtung des Pflanzsubstrats angibt.

Eine ungleichmäßige Durchfeuchtung, insbesondere wenn sie auf dieselbe Pflanzebene bezogen ist, erschwert die gezielte Einstellung der Umgebungsbedingungen, beispielsweise durch Zugabe von Wasser zu einer Pflanzebene und kann auf einen Mangel oder Defekt hinweisen. Durch Absetzen einer feuchtigkeitsbezogenen Fehlermeldung kann das Bedienpersonal der Pflanzenaufzuchteinheit über den Missstand informiert werden und Gegenmaßnahmen einleiten. Dabei kann eine ungleichmäßige Durchfeuchtung beispielsweise dann vorliegen, wenn der Unterschied zwischen Bereichen mit maximaler Durchfeuchtung und solchen mit minimaler Durchfeuchtung einen vorgegebenen Grenzwert überschreitet.

Gemäß einer weiteren vorteilhaften Ausführungsform des erfindungsgemäßen Verfahrens kann vorgesehen sein, dass mittels zumindest einer weiteren im Bereich der Aufnahmeebene angeordneten Kamera ein Farbinformationen umfassendes Bild der Pflanzobjekte aufgenommen wird, das zur Einstellung der gewünschten Umgebungsbedingungen herangezogen wird.

Auf diese Weise kann zusätzlich zur mit der Wärmebildkamera aufgenommenen Bildinformation auch eine Echtbildinformation zur Überwachung des Wachstums der Pflanzobjekte herangezogen werden. Diese kann beispielsweise zur Erkennung der Veränderung der Biomasse dienen. Dabei wird das aufgenommene Bild pixelgenau ausgewertet, um Pflanzenteile, insbesondere Blattwerk, zu erkennen und die Veränderung über der Zeit beobachten zu können.

Außerdem kann in diesem Zusammenhang auch vorgesehen sein, dass die Regeleinrichtung eine qualitätsbezogene Fehlermeldung erzeugt, wenn anhand der Farbinformation eine unzulässige Verfärbung zumindest eines der Pflanzobjekte erkannt wird.

Bei der letztgenannten Methode wird somit die Farbinformation des Echtbildes ausgewertet. Werden hierdurch Verfärbungen, z.B. durch erhöhte Gelb- oder Rotanteile des Bildes, erkannt, wird eine qualitätsbezogene Fehlermeldung abgesetzt, um das Bedienpersonal der Pflanzenaufzuchteinheit über den Missstand zu informieren. Die betroffenen Pflanzobjekte können dann von der Pflanzebene entfernt oder durch Rückschnitt behandelt werden.

Als vorteilhaft wird es außerdem angesehen, wenn die Regeleinrichtung zur Ansteuerung der gewünschten Umgebungsbedingungen pflanzobjektspezifische Sollwerte eines Feuchtigkeitsstatus des Pflanzsubstrats und/oder einer Biomassezunahme der Pflanzobjekte heranzieht.

Bei dieser Ausführungsform wird somit ein vollständiger Regelkreis aufgebaut, der als Regelgröße die Abweichung zwischen pflanzobjektspezifischen Soll- und Istwerten verwendet. Insbesondere können hierbei Parameter wie die Feuchtigkeit des Substrats und die Biomasse der Pflanzobjekte verwendet werden. Während die Feuchtigkeit des Substrats insbesondere beim Keimungsprozess eine besondere Rolle spielt, kann die Überwachung der Biomasse bevorzugt beim Wachstumsprozess der Pflanzobjekte eingesetzt werden. Die Regeleinrichtung kann hierbei mit einer Datenbank zusammenwirken, in der für jede Art bzw. Sorte von Pflanzobjekten spezifische Sollwerte für die Feuchtigkeit des Substrats und/oder die Biomasse als zeitabhängige Vorgaben gespeichert sind. Beispielsweise kann die Datenbank bei einem insgesamt 7-tägigen Keimungs- und Wachstumsprozess eines Pflanzobjektes für die ersten beiden Tage, in denen die Keimung stattfindet, tages- oder stundenweise Sollwerte für die Feuchtigkeit umfassen, während die Sollwerte für die erwartete Biomasse auf Null stehen. Nach der Keimung bilden die Sollwerte eine dauerhafte Zunahme der Biomasse ab, während die Sollwerte für die Feuchtigkeit einen konstanten Wert annehmen, der für eine ausreichende Nährstoffversorgung der Pflanzobjekte ohne Überfeuchtung angemessen ist. Die Regeleinrichtung erkennt anhand der Bilder der Wärmebildkamera bzw. der weiteren Kamera aktuelle Istwerte für Feuchtigkeit und/oder Biomasse und kann anhand der Abweichungen zwischen Soll- und Istwert die Umgebungsbedingungen entsprechend einstellen. Insbesondere kann bei einer erkannten feuchtigkeitsbezogenen Abweichung die mittels einer Bewässerungseinrichtung zugeführte Wassermenge angepasst werden, während bei einer biomassebezogenen Abweichung eine Beleuchtungseinrichtung zur Anpassung der Dauer und Intensität einer Beleuchtung für die Pflanzobjekte angesteuert werden kann.

Schließlich kann gemäß einer weiteren vorteilhaften Ausführungsform des erfindungsgemäßen Verfahrens vorgesehen sein, dass die Regeleinrichtung eine nutzerspezifische Eingabe hinsichtlich eines gewünschten Erntezeitpunkts der Pflanzobjekte zur Einstellung der gewünschten Umgebungsbedingungen heranzieht.

Bei dieser Ausführungsform kann der Erntezeitpunkt durch gezielte Anpassung der Regelung in gewissen Grenzen auf einen früheren oder späteren Zeitpunkt verschoben werden. Beispielsweise kann hierdurch bei einer 7-tägigen Keimungs- und Wachstumsphase der Erntezeitpunkt um einen Tag nach vorn oder hinten verschoben werden. Beispielsweise kann eine Verzögerung des Erntezeitpunkts durch verringerte Lichtintensität in der Wachstumsphase oder geringere Durchfeuchtung des Pflanzsubstrats in der Keimungsphase erreicht werden. Durch die Anpassung des Erntezeitpunkts kann vorteilhaft auf Schwankungen des Bedarfs von Pflanzobjekten reagiert werden, beispielsweise durch verringerte oder erhöhte Nachfrage beim Verkauf in einem Supermarkt.

Als eigenständige Erfindung wird zudem eine Pflanzenaufzuchteinheit mit zumindest einer Aufnahmeebene für Pflanzobjekte umfassendes Pflanzsubstrat sowie mit einer Regeleinrichtung angesehen, die zur Einstellung gewünschter Umgebungsbedingungen für die Pflanzobjekte eingerichtet ist, wobei im Bereich der Aufnahmeebene zumindest eine weitere Kamera angeordnet ist, die zur Aufnahme eines Farbinformationen umfassenden Bildes der Pflanzobjekte eingerichtet ist und die Regeleinrichtung dazu ausgebildet ist, das von der zumindest einen weiteren Kamera gelieferte Bild der Pflanzobjekte zur Einstellung der Umgebungsbedingungen für die Pflanzobjekte heranzuziehen. Insbesondere wird es als eigenständige Erfindung angesehen, wenn die Regeleinrichtung eine qualitätsbezogene Fehlermeldung erzeugt, wenn anhand der Farbinformation eine unzulässige Verfärbung zumindest eines der Pflanzobjekte erkannt wird. Außerdem wird ein entsprechendes Verfahren zum Betreiben einer solchen Pflanzenaufzuchteinheit als eigenständige Erfindung angesehen. Kombinationen dieser eigenständigen Erfindungen mit allen voranstehend und nachfolgend beschriebenen Ausführungsformen werden ausdrücklich als vorteilhafte Weiterbildungen der eigenständigen Erfindungen angesehen.

Voranstehend wurden Ausführungsformen der Erfindung beschrieben, um eine Überwachung und Regelung des Keimungs- und Wachstumsprozesses von Pflanzobjekten (z. B. sogenannten "Microgreens" bzw. Microleaves") in einer Pflanzenaufzuchteinheit zu realisieren. Dabei wird gemäß einer vorteilhaften Ausführungsform eine visuelle Erfassung eines Feuchtigkeitsgehalts von Pflanzsubstrat (z. B. sogenannte "Microgreen-Pads") während der Keimungsphase mit einer visuellen Erfassung der Biomassenzunahme der Pflanzobjekte während der Wachstumsphase verknüpft, um so den gesamten Verlauf des Aufzuchtprozesses überwachen zu können. Gemäß einer weiteren vorteilhaften Ausführungsform gleicht die darauf basierende Regelung aktuelle Istzustände mit vorgegebenen Sollzuständen aus einer Datenbank ab, um so eine zugeführte Wassermenge und Beleuchtungsintensität und -dauer einzustellen.

Gemäß einer weiteren Ausführungsform erfolgt die Überwachung des Keimungs- und Wachstumsprozesses mit zumindest einer Wärmebild- bzw. weiteren Kamera (z. B. einer RGB-Kamera), welche bevorzugt oberhalb der Microgreen-Pads befestigt sind und sowohl Temperaturverteilung als auch die Biomassenzunahme erfassen. Der aktuelle Zustand wird zu jedem Zeitpunkt der Keimungs- bzw. Wachstumsphase mit Referenzzuständen verglichen, die beispielsweise für jeden Zeitpunkt einen erforderlichen Feuchtigkeitsgehalt und eine erwartete Biomassengröße angeben. Die auf dem Abgleich von Ist- und Sollzuständen basierende Regelung wird durch die Einstellung der Umgebungsbedingungen, z.B. durch Steuerung der Wasserzuführung und der Beleuchtungsintensität und -dauer, umgesetzt.

### Ausführungsbeispiel

Ein Ausführungsbeispiel der Erfindung ist in den Zeichnungen dargestellt und wird im Folgenden näher erläutert. Es zeigen:
- Fig. 1: eine schematische Ansicht eines Ausführungsbeispiels einer Pflanzenaufzuchteinheit;
- Fig. 2: eine beispielhafte Detailansicht zweier Aufnahmeebenen in einer Pflanzenaufzuchteinheit;
- Fig. 3: ein beispielhaftes Ablaufschema zur Überwachung des Feuchtigkeitszustands von Pflanzsubstraten; und
- Fig. 4: ein beispielhaftes Ablaufschema zur Überwachung der Biomassezunahme von Pflanzobjekten.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

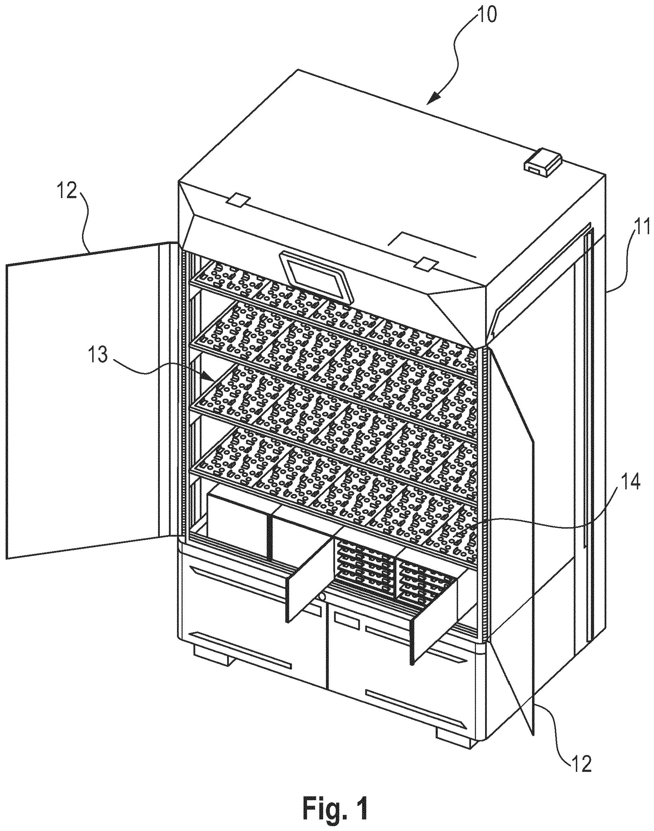

Die Figur 1 zeigt ein Ausführungsbeispiel einer Pflanzenaufzuchteinheit 10 zur Aufzucht von Pflanzobjekten, wie z.B. Kräutern, Salat und Zierpflanzen. Die Pflanzenaufzuchteinheit 10 weist ein Gehäuse 11 auf, das über Türen 12 vorne bedarfsweise geöffnet werden kann. Zur Aufzucht der Pflanzobjekte umfasst die Pflanzenaufzuchteinheit 10 einen Aufzuchtbereich 13. Im Ausführungsbeispiel der Figur 1 weist der Aufzuchtbereich 13 vier Aufnahmeebenen 14 auf, in denen die Pflanzobjekte z. B. auf Lochblechen gelagert werden können. Die Pflanzobjekte sind dabei in geeignetem Pflanzsubstrat, z.B. Saat- oder Pflanzmatten oder geeigneter Aufzuchterde, eingebracht. Innerhalb des Aufzuchtbereichs 13 sorgt eine Klimaeinheit (nicht in Figur 1 gezeigt) für eine für das Pflanzenwachstum optimale Temperatur und/oder Luftfeuchtigkeit. Außerdem ist eine Beleuchtungseinrichtung vorgesehen, die den Pflanzobjekten geeignete Lichtverhältnisse bereitstellt. Mittels einer Bewässerungseinrichtung wird den Pflanzobjekten Wasser zugeführt, das bei Bedarf mit Nährstoffen angereichert sein kann. Nach einer Keimphase mit anschließender Wachstumsphase, deren Dauern von der Art der Pflanzobjekte abhängen und insgesamt beispielsweise zwischen 5 - 7 Tagen betragen können, sind die Pflanzobjekte erntereif und können aus der Pflanzenaufzuchteinheit 10 entnommen und beispielsweise in Verkaufsregalen eines Supermarktes angeboten werden.

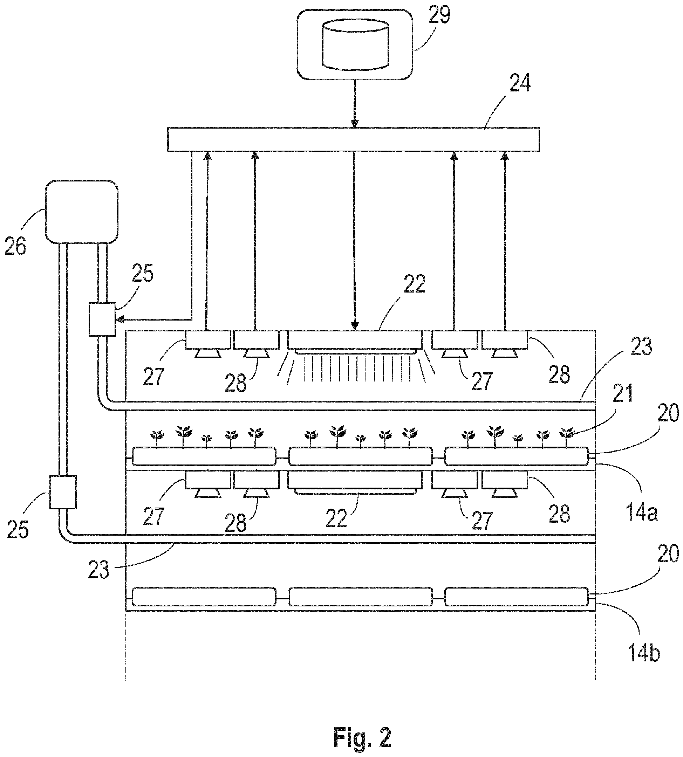

Figur 2 zeigt einen Ausschnitt der Pflanzenaufzuchteinheit 10 mit einer ersten Aufnahmeebene 14a und einer zweiten Aufnahmeebene 14b. Die Pflanzenaufzuchteinheit 10 kann im Rahmen der Erfindung eine beliebige Anzahl von Aufnahmeebenen 14 umfassen.

In der Aufnahmeebene 14a seien beispielhaft Pflanzsubstrate 20 mit lediglich schematisch angedeuteten Pflanzobjekten 21 eingebracht. Im Beispiel der Figur 2 haben die Pflanzobjekte 21 auf der Aufnahmeebene 14a ihre Keimungsphase bereits abgeschlossen und befinden sich innerhalb ihrer Wachstumsphase. Auf der Aufnahmeebene 14b seien Pflanzsubstrate 20 eingebracht, die Pflanzobjekte beinhalten, die sich noch innerhalb der Keimungsphase befinden.

Zur Bereitstellung optimaler Umgebungsbedingungen für die Pflanzobjekte sind eine Beleuchtungseinrichtung 22 und eine Bewässerungseinrichtung 23 vorgesehen, um die Pflanzobjekte mit ausreichendem Licht und Wasser zu versorgen. Bei der Bewässerungseinrichtung 23 kann es sich beispielsweise um gelochte Rohrleitungen handeln, aus deren Öffnungen kleine Tropfen oder ein feiner Sprühnebel auf die Pflanzsubstrate 20 verteilt werden. Daneben kann auch eine - in Figur 2 nicht gezeigte - Klimaeinheit zur Einstellung von Luftfeuchtigkeit und Temperatur vorhanden sein.

Die Einstellung der Umgebungsbedingungen - insbesondere durch geeignete Ansteuerung der Beleuchtungseinrichtung 22 und der Bewässerungseinrichtung 23 - übernimmt eine Regeleinrichtung 24. Diese ist zur Ansteuerung der Beleuchtungseinrichtung 22 über elektrische Signalleitungen mit dieser wirkverbunden. Zur Ansteuerung der Bewässerungseinrichtung 23 ist die Regeleinrichtung 24 mit Durchfluss-Steuereinheiten 25, wie Ventilen oder Pumpen, wirkverbunden, die sich im Leitungspfad der Bewässerungseinrichtung 23 nach einem Wasserreservoir 26 befinden und zur Einstellung des Durchflusses ausgebildet sind. In entsprechender Weise kann die Regeleinrichtung 24 mit weiteren Einrichtungen zur Einstellung von Umgebungsbedingungen, z. B. Klimaeinheiten, wirkverbunden sein.

Da die bereits gekeimten Pflanzobjekte 21 auf der Aufnahmeebene 14a andere Umgebungsbedingungen benötigen als die in der Keimungsphase befindlichen Pflanzobjekte in der Aufnahmeebene 14b, können die Umgebungsbedingungen von der Regeleinrichtung 24 für jede Aufnahmeebene 14 separat eingestellt werden. Beispielsweise keimen viele Pflanzenarten in Dunkelheit (Dunkelkeimer) oder unter nur geringer Lichteinstrahlung. Auch ist die benötigte Feuchtigkeit der Pflanzsubstrate während der Keimungsphase auf anderen Werten zu halten als während der Wachstumsphase. Zudem benötigen unterschiedliche Arten von Pflanzobjekten unterschiedliche Umgebungsbedingungen für ihre optimale Entwicklung. Auch hierfür ist eine separate Ansteuerung der Umgebungsbedingungen für die jeweiligen Aufnahmeebenen 14 vorteilhaft.

Zur automatischen Regelung der Aufzucht der Pflanzobjekte 21 (sogenannte "Microgreens") in Pflanzenaufzuchteinheiten 10, wie kompakten Gewächshäusern oder -schränken, werden vorliegend eine visuelle Erfassung des Wachstumsfortschritts und eine Bewertung der Qualität der Pflanzobjekte durchgeführt. Eine Besonderheit der Aufzucht von Pflanzobjekten 21 in Pflanzenaufzuchteinheiten 10 ist die kurze Zeitdauer von der Keimung bis zur Ernte, welche beispielsweise lediglich 5 - 7 Tage umfasst. Somit sind für die optimale Unterstützung des Aufzuchtprozesses eine schnelle und automatisierte Überwachung und Regelung erforderlich.

Um dies bei der vorliegenden Pflanzenaufzuchteinheit 10 zu gewährleisten, überwacht zumindest eine Wärmebildkamera 27 die Feuchtigkeit des Pflanzsubstrats, was insbesondere für die Regelung im Keimungsprozess vorteilhaft ist, und zumindest eine weitere Kamera 28, die zur Aufnahme eines Farbinformationen enthaltenden Echtbildes ausgebildet ist, die Biomassezunahme in der Wachstumsphase nach der Keimung. Bei der weiteren Kamera 28 kann es sich z. B. um eine RGB-Kamera handeln. Die zumindest eine Wärmebildkamera 27 und die zumindest eine weitere Kamera sind vorzugsweise zur Aufnahme einer Draufsicht auf die Aufnahmeebenen 14 über den Aufnahmeebenen 14 angeordnet und derart ausgerichtet, dass der optische Pfad im Wesentlichen senkrecht zur Aufnahmeebene 14 ausgerichtet ist.

Die aufgenommenen Wärmebilder bzw. Echtbilder werden als Einzelbilder oder als kontinuierliche Bildfolge ("Stream") an die Regeleinrichtung 24 weitergeleitet, die zu diesem Zweck mit der zumindest einen Wärmebildkamera 27 und der zumindest einen weiteren Kamera 28 über elektrische Signalleitungen verbunden ist. Die Wärmebildkamera 27 und die weitere Kamera 28 können abweichend zur Darstellung in Figur 2 auch in einer Baueinheit zusammengefasst sein.

Innerhalb der Regeleinrichtung 24 gleicht eine softwarebasierte Logik die erhobenen visuellen Daten als Istzustände mit pflanzobjektspezifischen Sollzuständen ab und regelt basierend darauf die Beleuchtung und Wassermenge der entsprechenden Aufnahmeebene 14 in der Pflanzenaufzuchteinheit 10 und teilt dem Betreiber Qualitätsbeanstandungen mit. Die pflanzenobjektspezifischen Sollzustände sind in einer Datenbank 29, auf die die Regeleinrichtung 24 zugreifen kann, in als Zeitreihen für verschiedene Pflanzobjekte hinterlegt.

Hierzu werden beim Keimungsprozess über die zumindest eine Wärmebildkamera 27 Temperaturdaten der einzelnen Pflanzsubstrate 20 erfasst, um so auf deren Feuchtigkeit schließen zu können. Die Daten werden anschließend von der Regeleinrichtung 24 als Istzustand der Feuchtigkeit der Pflanzsubstrate 20 ausgewertet und mit einem Sollzustand verglichen. Der Sollzustand hängt dabei sowohl von der Art bzw. Sorte der im Pflanzsubstrat enthaltenen Pflanzobjekte als auch vom Zeitpunkt innerhalb des Keimungsprozesses ab. Dabei unterscheidet die Regeleinrichtung 24 zwischen den beiden folgenden Fällen:
Bei einem Missstand (also einer Abweichung zwischen Ist- und Sollzustand) des Feuchtigkeitsgehalts eines einzelnen bzw. mehrerer Pflanzsubstrate 20 wird die Wassermenge der fraglichen Aufnahmeebene 14 durch entsprechende Ansteuerung der Bewässerungseinrichtung 23 zum Sollzustand hin angepasst.

Bei einer ungleichmäßigen Feuchtigkeitsverteilung innerhalb eines einzelnen bzw. mehrerer benachbarter Pflanzsubstrate 20 wird der Betreiber der Pflanzenaufzuchteinheit 10 durch eine feuchtigkeitsbezogene Fehlermeldung über den Missstand informiert. Diese Fehlermeldung kann beispielsweise auf einem Display der Pflanzenaufzuchteinheit 10 angezeigt und/oder über ein akustisches Signal ausgegeben werden.

Während der an die Keimungsphase anschließenden Wachstumsphase wird über die zumindest eine weitere Kamera 28 die Biomassenzunahme und Farbe der Pflanzobjekte 21 überwacht. Das aufgenommene Bild wird von der Regeleinrichtung 24 als Istzustand ausgewertet und mit einem Sollzustand verglichen. Der Sollzustand hängt dabei sowohl von der Sorte bzw. Art der Pflanzobjekte 21 als auch vom Wachstumszeitpunkt ab. Dabei unterscheidet die Regeleinrichtung 24 zwischen den beiden folgenden Fällen:
Bei einem Missstand (Abweichung zwischen Ist- und Sollzustand) der Biomassenzunahme eines einzelnen bzw. mehrerer Pflanzobjekte, wird die Beleuchtungsdauer und/oder -intensität der fraglichen Aufnahmeebene 14 durch geeignete Ansteuerung der Beleuchtungseinheit dem Sollzustand angepasst.

Bei einer anhand der Farbinformation erkannten Verfärbung eines einzelnen bzw. mehrerer benachbarter Pflanzobjekte 21 wird der Betreiber der Pflanzenaufzuchteinheit 10 mittels einer qualitätsbezogenen Fehlermeldung über den Missstand informiert. Diese Fehlermeldung kann beispielsweise auf einem Display der Pflanzenaufzuchteinheit 10 angezeigt und/oder über ein akustisches Signal ausgegeben werden.

Das vorgestellte Konzept ermöglicht dem Betreiber der Pflanzenaufzuchteinheit 10 einen automatisierten und skalierbaren Betrieb von Pflanzenaufzuchteinheiten 10 und schafft damit die Grundlage für ein optimales Wachstum unterschiedlicher Pflanzobjekte. Zudem ergeben sich weitere Optimierungsmöglichkeiten, da sich die Regelung durch gezielte Beeinflussung der Umgebungsbedingungen entsprechend einer Nutzervorgabe hinsichtlich eines gewünschten Erntetermins anpassen lässt. Somit kann der Betreiber, je nach Bedarf bzw. Nachfrage, den optimalen Erntezeitpunkt beispielsweise um einen Tag verschieben.

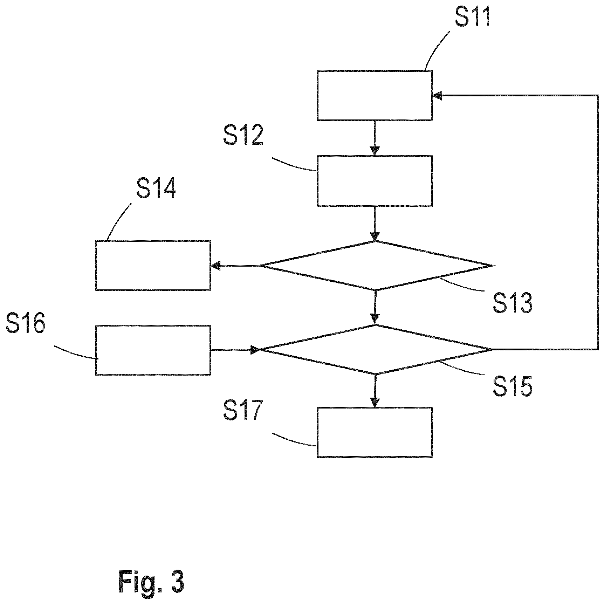

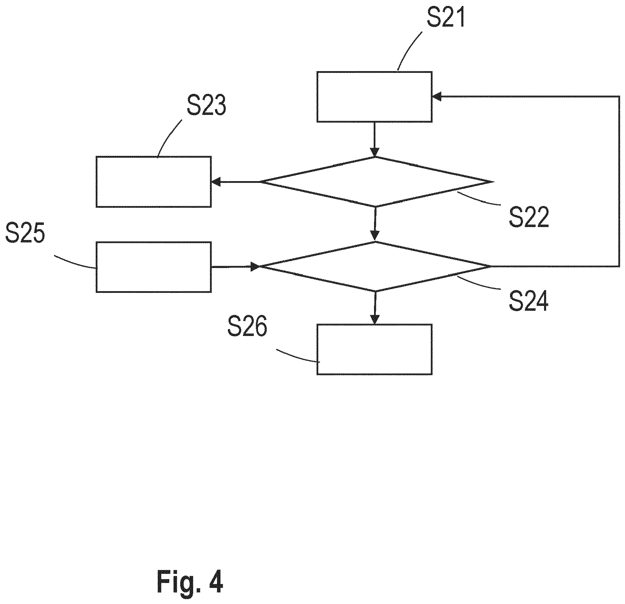

Nachfolgend wird die Arbeitsweise der Regeleinrichtung 24 anhand von in den Figuren 3 und 4 dargestellten Ablaufschemata detaillierter ausgeführt.

Hierzu zeigt Figur 3 eine schematische Darstellung des Regelungsprozesses zur visuellen Überwachung von Pflanzobjekten mittels einer Wärmebildkamera. Dieser Prozess dient gemäß dem Ausführungsbeispiel der Figur 3 zur Überwachung und Regelung der Durchfeuchtung des Pflanzsubstrats und kann insbesondere zur Optimierung des Keimungsprozesses der Pflanzobjekte eingesetzt werden.

In einem ersten Schritt S11 wird mittels der zumindest einen Wärmebildkamera 27 (vgl. Figur 2) eine Erfassung der Temperaturverteilung von Pflanzsubstraten 20 durchgeführt. In diesem Schritt wird die Temperaturverteilung eines bzw. mehrerer Pflanzsubstrate 20 mit einer bzw. mehreren Wärmebildkameras 27 erfasst. Die Wärmebildkameras 27 können sich hierbei wie in Figur 2 dargestellt oberhalb der Aufnahmeebenen 14 mit den Pflanzsubstraten 20 befinden und erfassen Temperaturintensitäten der gesamten Fläche eines einzelnen bzw. mehrerer Pflanzsubstrate 20 (z.B. Pflanzmatten).

In einem folgenden Schritt S12 wird das in Schritt S11 aufgenommene Wärmebilds in eine Feuchtigkeitsverteilung umgerechnet. Um die im Wärmebild enthaltenen Temperaturdaten in eine Feuchtigkeitsinformation zu überführen, werden Temperaturwerten anhand eines bekannten Zusammenhangs Feuchtigkeitsintensitäten einzeln zugeordnet, Der Zusammenhang kann beispielsweise in einer Transfertabelle beschrieben sein, die in der Datenbank 29 hinterlegt ist. Alternativ kann der Zusammenhang auch in einer Kennlinie oder einer mathematischen Funktion (z. B. einer empirisch ermittelten Gleichung) festgelegt sein. Der Zusammenhang zwischen Temperatur und Feuchtigkeit kann hierbei vom Pflanzsubstrat abhängen, so dass für unterschiedliche Pflanzsubstrate in der Datenbank unterschiedliche Zusammenhänge hinterlegt sein können.

In einem nächsten Schritt S13 wird überprüft, ob die in Schritt S12 ermittelte Feuchtigkeitsverteilung zu ungleichmäßig ist. Eine ungleichmäßige Feuchtigkeitsverteilung liegt dann vor, wenn der Unterschied zwischen Maximal- und Minimalwerten der Feuchtigkeit innerhalb eines Pflanzsubstrats 20 oder mehrerer benachbarter Pflanzsubstrate derselben Aufnahmeebene 14 einen Grenzwert überschreiten. Sollte dies zutreffen, wird in einem Schritt S14 eine feuchtigkeitsbezogene Fehlermeldung erzeugt und ausgegeben. Hierdurch wird der Betreiber der Pflanzenaufzuchteinheit 10 über diesen Missstand informiert, so dass er Gegenmaßnahmen ergreifen kann.

Sofern in Schritt S13 keine unzulässig ungleichmäßige Durchfeuchtung erkannt wurde, wird das Verfahren in Schritt S15 fortgesetzt, in dem der aus den Wärmebildern ermittelte Istzustand der Feuchtigkeit mit einem pflanzobjektspezifischen Sollzustand verglichen wird. Dazu greift die Regeleinrichtung 24 in Schritt S16 auf in der Datenbank 29 gespeicherte Zeitreihen von Sollzuständen zu. Aus der Datenbank 29 wird somit in Schritt S16 eine der Art bzw. Sorte des fraglichen Pflanzobjektes entsprechende Zeitreihe von Feuchtigkeitszuständen ausgewählt. Dabei handelt es sich beispielsweise um eine Information über den erforderlichen Feuchtigkeitsgehalt des Pflanzsubstrats zu jedem Zeitpunkt des Keimungsprozesses eines Pflanzobjektes. Die aus der Datenbank 29 bezogenen Sollzustände werden in Schritt S15 für ihren jeweiligen spezifischen Zeitpunkt der Zeitreihe mit den jeweils ermittelten Istzuständen der Feuchtigkeitsintensität verglichen und ggf. eine jeweilige Abweichung ermittelt.

In einem folgenden Schritt S17 wird diese Abweichung von der Regeleinrichtung 24 als Regelgröße verwendet, um die Bewässerungseinrichtung 23 zur Erhöhung oder Verringerung der Wasserzugabe anzusteuern.

Figur 4 zeigt schließlich eine schematische Darstellung des Regelungsprozesses zur visuellen Überwachung von Pflanzobjekten mittels der zumindest einen weiteren Kamera 28. Dieser Prozess dient gemäß dem Ausführungsbeispiel der Figur 4 zur Überwachung und Regelung des Wachstumsprozesses der Pflanzobjekte anhand einer Ermittlung der Zunahme ihrer Biomasse.

In einem ersten Schritt S21 wird mittels der zumindest einen weiteren Kamera 28 (vgl. Figur 2) ein Farbinformationen umfassendes Echtbild der Pflanzobjekte 20 aufgenommen. In diesem Schritt S11 wird somit die Biomasse eines bzw. mehrerer Pflanzobjekte 20 mit einer bzw. mehreren weiteren Kameras 28 (z. B. RGB-Kameras) erfasst. Diese weiteren Kameras 28 können sich wie in Figur 2 dargestellt oberhalb der die Pflanzobjekte 20 enthaltenden Aufnahmeebenen 14 befinden und segmentieren pixelweise die Biomasse der Pflanzobjekte. Dazu wird ein pixelgenaues Raster über das aufgenommene Echtbild gelegt und anhand einer Mustererkennung, die beispielsweise die typische Formgebung und Farbe von Blattwerk heranzieht, eine Erkennung der Biomasse der einzelnen Pflanzobjekte 20 durchgeführt.

Falls dabei in einem folgenden Schritt S22 anhand der Farbinformation eine auffällige Verfärbung (z. B. erhöhte Gelb- oder Rotanteile in der Farbinformation) einzelner oder mehrerer Pflanzobjekte festgestellt wird, wird in einem Schritt S23 eine qualitätsbezogene Fehlermeldung erzeugt und ausgegeben. Hierdurch wird der Betreiber der Pflanzenaufzuchteinheit 10 über diesen Missstand informiert, so dass er Gegenmaßnahmen ergreifen kann.

Sofern in Schritt S22 keine auffällige Verfärbung festgestellt worden ist, wird das Verfahren bei Schritt S24 fortgesetzt, in dem der aus den Bildern ermittelte Istzustand der Biomasse mit einem pflanzobjektspezifischen Sollzustand verglichen wird. Dazu greift die Regeleinrichtung 24 in Schritt S25 auf in der Datenbank 29 gespeicherte Zeitreihen von Sollzuständen zu. Aus der Datenbank 29 wird somit in Schritt S25 eine der Art bzw. Sorte des fraglichen Pflanzobjektes entsprechende Zeitreihe von erwarteten Biomassezuständen ausgewählt. Dabei handelt es sich beispielsweise um eine Information über die erforderliche Biomassenfläche der jeweiligen Pflanzobjekte 20 zu jedem Zeitpunkt des Wachstumsprozesses. Die aus der Datenbank 29 bezogenen Sollzustände werden in Schritt S24 für ihren jeweiligen spezifischen Zeitpunkt der Zeitreihe mit den jeweils ermittelten Istzuständen der Biomassefläche verglichen und ggf. eine jeweilige Abweichung ermittelt.

In einem folgenden Schritt S26 wird diese Abweichung von der Regeleinrichtung 24 als Regelgröße verwendet, um die Beleuchtungseinrichtung 22 zur Erhöhung oder Verringerung der Dauer bzw. Intensität der Lichteinstrahlung auf die Pflanzobjekte 20 anzusteuern.

Die in Figuren 3 und 4 beschriebene Regelung kann neben der Ansteuerung der Bewässerungseinrichtung 23 bzw. Beleuchtungseinrichtung 22 auch andere Einrichtungen zur Einstellung von Umgebungsparametern ansteuern, wie beispielsweise Klimaeinheiten zur Beeinflussung von Temperatur und/oder Luftfeuchtigkeit. Die Regelverfahren gemäß Figuren 3 und 4 können zudem miteinander kombiniert werden, um eine auf Bildern von Wärmebildkameras als auch von weiteren Kameras basierende Regelung zu ermöglichen. Beispielsweise kann hiermit der komplette Aufzuchtprozess vom Keimungsprozess bis zum Wachstumsprozess überwacht und beeinflusst werden.

### Bezugszeichenliste

- 10: Pflanzenaufzuchteinheit
- 11: Gehäuse
- 12: Tür
- 13: Aufzuchtbereich
- 14 (14a, 14b): Aufnahmeebene
- 20: Pflanzsubstrat
- 21: Pflanzobjekt
- 22: Beleuchtungseinrichtung
- 23: Bewässerungseinrichtung
- 24: Regeleinrichtung
- 25: Durchfluss-Steuereinheit
- 26: Wasserreservoir
- 27: Wärmebildkamera
- 28: weitere Kamera
- 29: Datenbank
- S11 - S17: Schritte der Regelung anhand Wärmebildkamera
- S21 - S26: Schritte der Regelung anhand weiterer Kamera

## Patentansprüche

1. Pflanzenaufzuchteinheit (10) mit zumindest einer Aufnahmeebene (14) für Pflanzobjekte (21) umfassendes Pflanzsubstrat (20) sowie mit einer Regeleinrichtung (24), die zur Einstellung gewünschter Umgebungsbedingungen für die Pflanzobjekte (21) eingerichtet ist,
**dadurch gekennzeichnet, dass**
im Bereich der Aufnahmeebene (14) zumindest eine Wärmebildkamera (27) angeordnet ist, die dazu ausgebildet ist, ein Wärmebild des Pflanzsubstrats (20) aufzunehmen.

2. Pflanzenaufzuchteinheit (10) nach Anspruch 1,
**dadurch gekennzeichnet, dass**
die Regeleinrichtung (24) dazu ausgebildet ist, das von der Wärmebildkamera (27) gelieferte Bild in eine Feuchtigkeitsinformation des Pflanzsubstrats (20) umzusetzen und in Abhängigkeit von der Feuchtigkeitsinformation die Umgebungsbedingungen für die Pflanzobjekte (21) einzustellen.

3. Pflanzenaufzuchteinheit (10) nach einem der vorangehenden Ansprüche,
**dadurch gekennzeichnet, dass**
im Bereich der Aufnahmeebene (14) zumindest eine weitere Kamera (28) angeordnet ist, die zur Aufnahme eines Farbinformationen umfassenden Bildes der Pflanzobjekte (21) eingerichtet ist, und die Regeleinrichtung (24) dazu ausgebildet ist, das von der zumindest einen weiteren Kamera (28) gelieferte Bild der Pflanzobjekte (21) zur Einstellung der Umgebungsbedingungen für die Pflanzobjekte (21) heranzuziehen.

4. Verfahren zum Betreiben einer Pflanzenaufzuchteinheit (10) mit zumindest einer Aufnahmeebene (14) für Pflanzobjekte (21) umfassendes Pflanzsubstrat (20) sowie mit einer Regeleinrichtung (24), die zur Einstellung gewünschter Umgebungsbedingungen für die Pflanzobjekte (21) eingerichtet ist,
**dadurch gekennzeichnet, dass**
mittels zumindest einer im Bereich der Aufnahmeebene (14) vorgesehenen Wärmebildkamera (27) ein Wärmebild des Pflanzsubstrats (20) aufgenommen und von der Regeleinrichtung (24) zur Einstellung der gewünschten Umgebungsbedingungen für die Pflanzobjekte (21) herangezogen wird.

5. Verfahren nach Anspruch 4,
**dadurch gekennzeichnet, dass**
mittels der Regeleinrichtung (24) das Wärmebild des Pflanzsubstrats (20) in eine Feuchtigkeitsinformation umgesetzt wird, die zur Einstellung der gewünschten Umgebungsbedingungen herangezogen wird.

6. Verfahren nach Anspruch 5,
**dadurch gekennzeichnet, dass**
die Regeleinrichtung (24) eine feuchtigkeitsbezogene Fehlermeldung erzeugt, wenn die Feuchtigkeitsinformation eine ungleichmäßige Durchfeuchtung des Pflanzsubstrats (20) angibt.

7. Verfahren nach einem der Ansprüche 4 bis 6,
**dadurch gekennzeichnet, dass**
mittels zumindest einer weiteren im Bereich der Aufnahmeebene (14) angeordneten Kamera (28) ein Farbinformationen umfassendes Bild der Pflanzobjekte (21) aufgenommen wird, das zur Einstellung der gewünschten Umgebungsbedingungen herangezogen wird.

8. Verfahren nach Anspruch 7,
**dadurch gekennzeichnet, dass**
die Regeleinrichtung (24) eine qualitätsbezogene Fehlermeldung erzeugt, wenn anhand der Farbinformation eine unzulässige Verfärbung zumindest eines der Pflanzobjekte (21) erkannt wird.

9. Verfahren nach einem der Ansprüche 4 bis 8,
**dadurch gekennzeichnet, dass**
die Regeleinrichtung (24) zur Ansteuerung der gewünschten Umgebungsbedingungen pflanzobjektspezifische Sollwerte eines Feuchtigkeitsstatus des Pflanzsubstrats (20) und/oder einer Biomasse der Pflanzobjekte (21) heranzieht.

10. Verfahren nach einem der Ansprüche 4 bis 9,
**dadurch gekennzeichnet, dass**
die Regeleinrichtung (24) eine nutzerspezifische Eingabe hinsichtlich eines gewünschten Erntezeitpunkts der Pflanzobjekte (21) zur Einstellung der gewünschten Umgebungsbedingungen heranzieht.
